# EUROPEAN PATENT SPECIFICATION

(11) **EP 2 660 279 B1**
(45) Date of publication and mention of the grant of the patent: **30.11.2016**
(21) Application number: 11853639.0
(22) Date of filing: 05.10.2011
(51) Int. Cl.: C08J 9/04, B29C 44/00, C08L 21/00, B62D 25/16, B62D 25/20, B62D 29/00, C08J 9/00, C08J 9/10, C08J 9/06, C08J 9/32, C08K 5/08

(54) **PASTE-LIKE THERMALLY FOAMING FILLER**
PASTÖSER WÄRMESCHÄUMBARER FÜLLSTOFF
CHARGE THERMIQUEMENT MOUSSANT DE TYPE PÂTE

(30) Priority: 27.12.2010 JP 2010289329
(43) Date of publication of application: 06.11.2013
(73) Proprietor: Sunstar Engineering Inc., Osaka 569-1195 (JP)
(72) Inventor: KOBAYASHI Toshio, Takatsuki-shi Osaka 569-1195 (JP); KONO Junji, Takatsuki-shi Osaka 569-1195 (JP); SUGIURA Yutaka, Takatsuki-shi Osaka 569-1195 (JP)
(74) Representative: Vossius & Partner Patentanwälte Rechtsanwälte mbB
(86) International application number: PCT/JP2011/072970
(87) International publication number: WO 2012/090565

(56) References cited:
- WO-A1-2004/108807
- JP-A- 2001 323 096
- JP-A- 2004 244 508
- JP-A- 2008 007 704
- JP-A- 2008 208 256
- JP-A- 2010 143 956
- JP-A- 2011 099 558
- JP-A- 2011 162 573

## Description

### Technical Field

The present invention relates to a paste-like thermally foaming filler, and particularly relates to a paste-like thermally foaming filler suitable for forming a blocking wall for blocking wind noise during the car traveling by being charged into closed sections of car body members, such as a pillar of a car, and then foamed by the heat of a baking process of an electrodeposition coating film.

### Background Art

Heretofore, in order to improve silence of automobiles, wind noise has been blocked by attaching a polyurethane foam which has been foamed into a predetermined shape beforehand as a blocking wall to closed sections, such as a front pillar (A pillar), a center pillar (B pillar), a rear pillar (C pillar), a wheel arch (tire house), and a side sill. However, the method has had problems with difficulty of automatization and requiring a different specification for each car type and each car part. Then, as a method suitable for automatization, an automatic application type paste-like thermally foaming filler has been proposed.

For example, Patent Document 1 discloses a paste type thermally foaming filler containing a liquid rubber, an unvulcanized rubber, a vulcanizing agent, a vulcanization accelerator, a softener, a foaming agent, a foaming auxiliary agent, a scale-like inorganic filler, and a thixotropic agent as a paste type thermally foaming filler which can be automatically applied by a machine, has excellent adhesiveness to an oil-coated steel sheet, and has thixotropic properties and in which dripping after application can be prevented. Patent Document 2 discloses an automatic application type paste-like thermally foaming filler composition containing a partially crosslinked rubber, an unvulcanized rubber, a crosslinking agent, a plasticizer, a thermoplastic resin, epoxy resin and a latent curing agent thereof, and a foaming agent. These automatic application type paste-like thermally foaming fillers can achieve automatization, do not require a different specification for each car type or each part, and can form a blocking wall for blocking wind noise during the car traveling by being applied to a closed section space of a car by robot application, and then being foamed by the heat of a baking process of an electrodeposition coating film after the application.

In recent years, however, from the viewpoint of global environment problems, particularly a reduction of greenhouse gas, energy saving has been demanded also in the auto industry, so that there is a tendency of reducing the heating temperature in the baking process of an electrodeposition coating film. However, when the heating temperature is reduced, particularly in the case of a closed section space having a large cross section areas, such as a center pillar of a car, a gap is formed in the blocking wall due to poor foaming of the filler caused by insufficient heating in the center part of the space, so that there is a possibility that wind noise cannot be sufficiently blocked.

### Citation List

### Patent Literatures

- Patent Document 1:: JP-A No.H05-59345
- Patent Document 2:: WO 2004/108807

### Summary of Invention

### Technical Problem

It is an object of the present invention to provide a paste-like thermally foaming filler which achieves the reduction in the heating temperature and the automatization described above and exhibits high foaming capability even at lower temperatures.

### Solution to Problem

The present inventors have repeatedly conducted extensive research in order to achieve the above-described object, and have focused on a vulcanizing agent (crosslinking agent) for use in a paste-like thermally foaming material. For example, in Patent Document 1 described above, sulfur, a disulfide compound, and the like are used as the vulcanizing agent and a thiazole-based substance and the like are used as the vulcanization accelerator. In Patent Document 2, organic peroxides, such as ketone peroxide, peroxyketal, hydroperoxide, dialkylperoxide, facil peroxide, peroxyester, and peroxy dicarbonate, are used as the crosslinking agent. On the other hand, the present invention has been accomplished based on a finding such that a thermally foaming filler which achieves high foaming capability at lower temperatures as compared with the temperatures in former cases can be obtained by the use of a quinone-based substance as the vulcanizing agent.

More specifically, the present invention is a paste-like thermally foaming filler containing an uncrosslinked rubber, a quinone-based vulcanizing agent, a foaming agent, and thermally expandable balloons, wherein the foaming temperature of the thermally expandable balloons is 100°C or lower.

Preferable embodiments are as follows:
(1) the paste-like thermally foaming filler further contains a partially crosslinked rubber,
(2) the paste-like thermally foaming filler further contains a thermoplastic resin,
(3) the paste-like thermally foaming filler further contains a plasticizer, and
(4) the paste-like thermally foaming filler further contains an inorganic filler. More preferable embodiments are as follows:
(5) A paste-like thermally foaming filler contains 2 to 20 parts by weight of an uncrosslinked rubber, 5 to 30 parts by weight of a partially crosslinked rubber, 0.1 to 5 parts by weight of a quinone-based vulcanizing agent, 0.2 to 1.5 parts by weight of thermally expandable balloons, 1 to 10 parts by weight of a thermoplastic resin, 20 to 50 parts by weight of a plasticizer, 15 to 50 parts by weight of an inorganic filler, and 2 to 15 parts by weight of a chemical foaming agent, based on the total amount of 100 parts by weight of the paste-like thermally foaming filler.
(6) A paste-like thermally foaming filler contains the uncrosslinked rubber and/or the partially crosslinked rubber in a proportion of 8 parts by weight or more based on the total composition weight.

### Advantageous Effects of Invention

The paste-like thermally foaming filler according to the present invention obtained as described above can block wind noise during the car traveling by being automatically applied by a robot or the like to closed sections, such as a front pillar (A pillar), a center pillar (B pillar), a rear pillar (C pillar), a wheel arch (tire house), and a side sill, of car body members with a closed section structure press molded in a car body process of an automobile manufacturing line before assembling the car body members, subjected to pretreatment and electrodeposition application in the state where the car body members are left as they are, thermally foamed under the baking conditions in an electrodeposition furnace in the electrodeposition application process, and then filling the same to form a blocking wall at the closed sections. Furthermore, according to the present invention, high foaming capability is exhibited at lower temperatures as compared with the temperatures in former paste-like thermally foaming fillers by the use of a quinone-based compound as the crosslinking agent. Thus, energy saving in an automobile manufacturing process is achieved by reducing the temperature of the baking conditions in an electrodeposition furnace of an electrodeposition application process and a defect, such as poor filling, in a large-sized closed section space, such as a center pillar, can be overcome.

### Brief Description of the Drawings

Fig. 1 is an explanatory view illustrating a hat member to be used for evaluation of a paste-like thermally foaming filler.
Fig. 2 is an explanatory view illustrating a test piece shape for shower resistance evaluation.
Fig. 3 is an explanatory view illustrating a shower resistance evaluation device.
Fig. 4 is a graph showing the shower resistance evaluation results.

### Description of Embodiments

The paste-like thermally foaming filler according to the invention contains an uncrosslinked rubber, a quinone-based vulcanizing agent, a foaming agent and thermally expandable balloons having a foaming temperature of 100°C or lower, as essential ingredients. Preferably, the paste-like thermally foaming filler of the invention contains a partially crosslinked rubber. In addition thereto, a foaming auxiliary agent, a vulcanization auxiliary agent, a thermoplastic resin, a plasticizer, an inorganic filler, and the like which are used in former paste-like thermally foaming fillers can be combined as appropriate in the paste-like thermally foaming filler of the invention.

Mentioned as the uncrosslinked rubber for use in the invention are, for example, diene rubbers, such as acrylonitrile-isoprene copolymer rubber (NIR), acrylonitrile-butadiene copolymer rubber (NBR), styrene-butadiene copolymer rubber (SBR), butadiene rubber (BR), and isoprene rubber (IR). These uncrosslinked rubbers may be used singly or as a mixture of two or more kinds thereof.

Mentioned as the quinone-based vulcanizing agent for use in the invention are p-Benzoquinone dioxime, e.g., "VULNOC GM (trade name)" of Ouchi Shinko Chemical Industrial Co., Ltd. and "Actor Q (trade name)" of Kawaguchi Chemical Industry Co., Ltd., 1,4-benzoquinonebis (O-benzoyloxime) (p-p'-Dibenzoylbenzoquinone dioxime, e.g., "VULNOC DGM (trade name)" of Ouchi Shinko Chemical Industrial Co., Ltd. and "Actor DQ (trade name)" of Kawaguchi Chemical Industry Co., Ltd. and the like. As the quinone-based vulcanizing agent and the organic peroxides, such as ketone peroxide, peroxyketal, hydroperoxide, dialkyl peroxide, facil peroxide, peroxyester, and peroxydicarbonate, mentioned above, sulfur, a disulfide compound, and a vulcanization accelerator, thiazole-based substances and the like may be used in combination.

As the foaming agent for use in the invention, any substance may be used insofar as it is decomposed by heating to generate gas. For example, azo compounds (azodicarbonamide and the like), nitroso compounds (N,N'-dinitroso pentamethylene tetramine and the like), and hydrazine derivatives (diphenyl sulfone-3,3'-disulfohydrazide and the like) are mentioned. These foaming agents may be used singly or as a mixture of two or more kinds thereof. These foaming agents are preferably used in combination with foaming auxiliary agents (e.g., urea).

The partially crosslinked rubber for use in the invention is a rubber in which uncrosslinked rubber, such as the diene rubber, e.g., acrylonitrile-isoprene copolymer rubber (NIR), acrylonitrile-butadiene copolymer rubber (NBR), styrene-butadiene copolymer rubber (SBR), butadiene rubber (BR), and isoprene rubber (IR), and the like is partially crosslinked using a crosslinking agent, such as divinylbenzene or sulfur, beforehand. The partially crosslinked rubbers may be used singly or as a mixture of two or more kinds thereof. By the use of the partially crosslinked rubber, the separation tendency (thread breakage tendency) of the thermally foaming filler and a nozzle in the nozzle in automatic application can be improved.

As the thermally expandable balloons for use in the invention, one in which foaming gas is charged into a thermoplastic resin capsule is mentioned. As the thermoplastic resin constituting the capsule, copolymers, such as vinylidene chloride, acrylonitrile, acrylic acid ester, and methacrylic acid ester, are used. As the foaming gas to be charged into the capsule, isobutane, isopentane, low boiling point halogenated hydrocarbon, methyl silane, and the like are used. For the thermally expandable balloons, EXPANCEL (trade name) commercially available from Japan Fillite Co., Ltd., and the like can be used, for example. Thermally expandable balloons are used whose foaming temperature (softening point of the thermoplastic resin constituting the microcapsule) is 100°C or lower in terms of the fact that paste-like thermally foaming filler of the invention is satisfactorily foamed at low temperatures to increase the adhesiveness to an oil-coated steel sheet.

Mentioned as the thermoplastic resin for use in the invention are, for example, acrylic resin including polymers of alkyl acrylate ester (as the alkyl, methyl, ethyl, butyl, 2-ethylhexyl, and the like) or alkyl methacrylate ester (as the alkyl, methyl, ethyl, butyl, lauryl, stearyl, and the like) or copolymers with other acrylic monomers; MBS resin (methyl methacrylate / butadiene / styrene); ionomer resin; AAS resin (acrylonitrile / styrene / special rubber); AES resin (acrylonitrile / EPDM / styrene); AS resin (acrylonitrile / styrene); and ABS resin (acrylonitrile / butadiene / styrene); and, in addition thereto, polyurethane resin, polyester resin, and the like. These thermoplastic resins may be used singly or as a mixture of two or more kinds thereof.

As the plasticizer for use in the invention, any substance may be used insofar as the partially crosslinked rubber, the uncrosslinked rubber, and the thermoplastic resin mentioned above can be swollen and dissolved. Mentioned as the plasticizer are, for example, phthalate esters, such as di(2-ethylhexyl)phthalate, butyl benzylphthalate, dinonylphthalate, diisononylphthalate, diisodecylphthalate, diundecylphthalate, diheptylphthalate, and butylphthalylbutyl glycolate; aliphatic dibasic acid esters, such as dioctyl adipate, didecyl adipate, and dioctyl cebacate; polyglycol benzoic acid esters, such as polyoxyethylene glycol dibenzoate and polyoxypropylene glycol dibenzoate; phosphate esters, such as tributyl phosphate and tricresyl phosphate; hydrocarbons, such as alkyl-substituted diphenyl, alkyl-substituted terphenyl, partially hydrogenated alkyl terphenyl, aromatic processing oil, and pine oil. These plasticizers may be used singly or as a mixture of two or more kinds thereof. In the paste-like thermally foaming filler of the invention, these plasticizers can achieve swelling and dissolution of the partially crosslinked rubber, the uncrosslinked rubber, and the thermoplastic resin mentioned above and can adjust the viscosity of the paste-like thermally foaming filler to a suitable viscosity.

As the inorganic filler for use in the invention, calcium carbonate, silica, clay, fly ash, and the like are mentioned but the inorganic filler is not limited thereto. These inorganic fillers may be used singly or as a mixture of two or more kinds thereof.

The paste-like thermally foaming filler of the invention may further contain an appropriate amount of other additives as required, e.g., thixotropy imparting agents (organic bentonite, fumed silica, aluminum stearate, metallic soaps, castor oil derivatives, and the like), pigments (carbon black, titanium oxide, other inorganic pigments, and the like), dehydrators (calcium oxide, powder silica gel, and the like), and the like.

A suitable compounding example of the ingredients in the paste-like thermally foaming filler of the invention is as follows (based on the total amount of 100 parts by weight).

Uncrosslinked rubber: 2 to 20 parts by weight, more preferably 2 to 15 parts by weight.

Partially crosslinked rubber: 5 to 30 parts by weight, more preferably 5 to 20 parts by weight.

Quinone-based vulcanizing agent: 0.1 to 5 parts by weight, more preferably 0.1 to 3 parts by weight.

Thermally expandable balloons: 0.2 to 1.5 parts by weight, more preferably 0.5 to 1.5 parts by weight.

Thermoplastic resin: 1 to 10 parts by weight, more preferably 1 to 5 parts by weight.

Plasticizer: 20 to 50 parts by weight, more preferably 30 to 50 parts by weight.

Inorganic filler: 15 to 50 parts by weight, more preferably 30 to 50 parts by weight.

Chemical foaming agent: 2 to 15 parts by weight, more preferably 2 to 10 parts by weight.

Foaming auxiliary agent: 1 to 15 parts by weight, more preferably 1 to 10 parts by weight.

When the compounding amount of the uncrosslinked rubber and/or the partially crosslinked rubber is 8 parts by weight or more, the shower resistance improves. Thus, the compounding amount is more preferable.

The paste-like thermally foaming filler of the invention can be produced by mixing the ingredients mentioned above by a mixer. The type of the mixer to be used is not particularly limited and, for example, various mixers, such as a planetary mixer and a kneader, can be used.

The viscosity of the paste-like thermally foaming filler of the invention obtained as described above is usually set to 50 to 150 Pa·s (at 20°C and a shear rate of 430ₛ⁻¹). The foaming start temperature by a chemical foaming agent is set to be preferably 100°C or higher and more preferably 110 to 140°C. The viscosity is adjusted by the amount of the plasticizer. When the viscosity is lower than 50 Pa·s, dripping occurs, so that the shape cannot be sufficiently maintained. However, when the viscosity exceeds 150 Pa·s, there is a tendency such that the workability becomes bad and sufficient dischargeability is not obtained.

The paste-like thermally foaming filler of the invention is suitably used for the formation of a blocking wall at closed sections in which noise, such as wind noise, arises during the car traveling, such as a front pillar (A pillar), a center pillar (B pillar), a rear pillar (C pillar), a wheel arch (tire house), and a side sill, in car body members with a closed section structure of automobiles, for example, and can form the blocking wall at the closed sections by filling the same by being automatically applied by a robot or the like to closed sections of car body members with a closed section structure press molded in a car body process of an automobile manufacturing line before assembling the car body members, subjected to pretreatment and electrodeposition application in the state where the car body members are left as they are, and then thermally foamed under the baking conditions in an electrodeposition furnace in the electrodeposition application process.

### Examples

### (Examples 1 to 12, Comparative Examples 1 to 6)

Each ingredient was compounded according to the compounding amount shown in Table 1, stirred and mixed for 30 minutes by a planetary mixer, and then defoamed under reduced pressure for 30 minutes to thereby produce paste-like thermally foaming fillers. The obtained paste-like thermally foaming fillers were evaluated for adhesiveness, volume change, viscosity, shower resistance, and hat fillability according to the following methods. The results are collectively shown in Table 1. The raw materials used in Examples are shown in Table 2.

### (Adhesiveness)

Each test material was applied to an oil-coated steel sheet with a sheet thickness of 1.2 mm in a semicircular bead shape of about 20 mmφ with a length of 100 mm, and then baked by holding the same at 130°C for 20 minutes. After allowed to stand for 2 hours or more until the temperature reached room temperature, each test material after thermally foamed was separated in a vertical direction, and then the destruction state of the oil-coated steel sheet surface was checked to judge the adhesiveness.

### Evaluation criteria

⊚: Cohesive failure of 100% or lower and 80% or more
○: Cohesive failure of lower than 80% and 60% or more
Δ: Cohesive failure of lower than 60% and 40% or more

### (Volume change rate; %)

About 2 g of each test material is applied to the center portion of a glass plate in a semicircular shape by a cartridge without causing entering of the air, and then the weight is measured. The application volume is calculated using the test material specific gravity and the test material weight. Next, the glass plate to which each test material is applied is baked by holding the same at 140°C for 20 minutes, and then allowed to stand for 2 hours or more until the temperature reaches room temperature. Thereafter, the volume after foamed of each test body is calculated with an underwater substitution method, and then the volume is compared with the application volume to thereby calculate the volume change rate. The measurement is performed under the conditions of 20°C and 65%RH.

### (Initial viscosity)

The viscosity at 20°C and 65%RH and a shear rate of 430 sec⁻¹ is measured using a pressure viscometer.

### (Shower resistance)

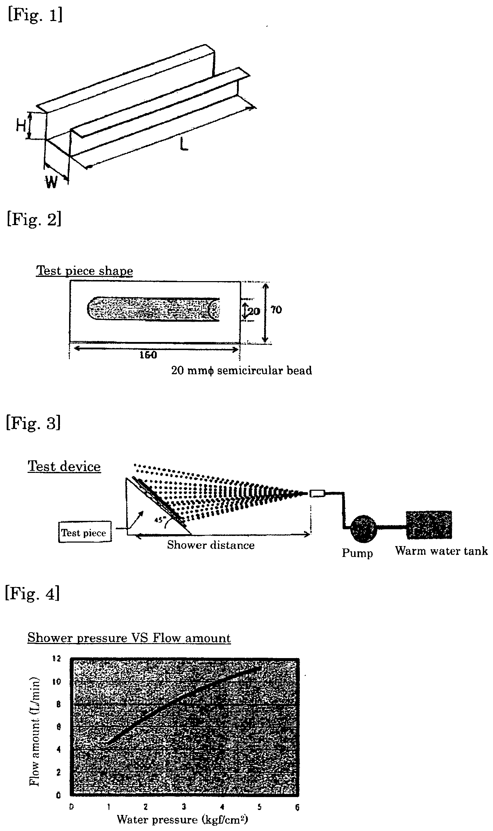

With respect to the test materials, each test piece applied with about 20 mmφ as illustrated in Fig. 2 was evaluated for shower resistance under the following conditions with a test device illustrated in Fig. 3.
Shower conditions: Water temperature of 50°C
Shower angle: 45°
Shower pressure: 3 kgf/cm² (about 0.3 MPa)
Shower time: 1 minute
Nozzle: K9S type PT1/4 x 5.0 Katorigumi Seisakusho
Evaluation criteria
○: Material fixing rate of 95% or more
×: Material fixing rate of lower than 95%

### (Hat fillability)

Along the section in a hat-like member of an oil-coated steel sheet processed into Depth (H) of 50 mm × Width (W) of 130 mm × Length (L) of 300 mm × Plate thickness of 1.2 mm and a flange width of 15 mm, a semicircular bead of about 25 mmφ is applied with a section length of 230 mm, and then covered with an oil-coated steel sheet of Width (W) of 160 mm × Length (L) of 300 mm, and fixed. In the state where each test body was vertically held, each test body was baked by holding the same at 130°C for 20 minutes. After allowed to stand for 2 hours or more until the temperature reaches room temperature, the covering material is removed, and then the filling state to the hat member section area of 6500 mm² is checked.

### Evaluation criteria

⊚: Member filling of 100%
○: Member filling of lower than 100% and 95% or more
×: Member filling of lower than 95%

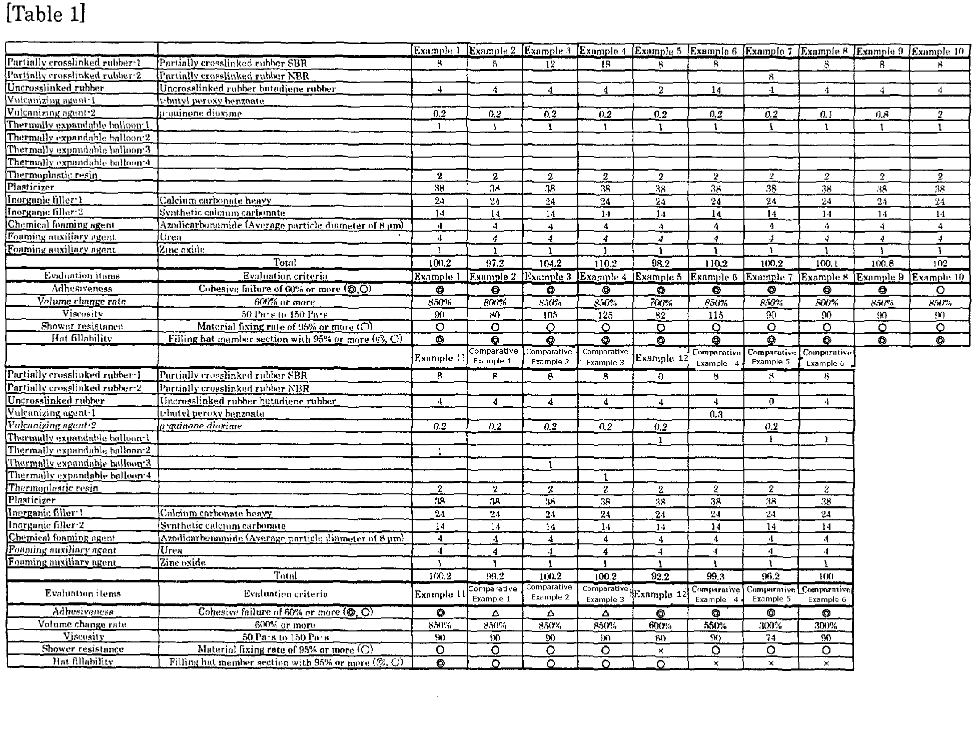

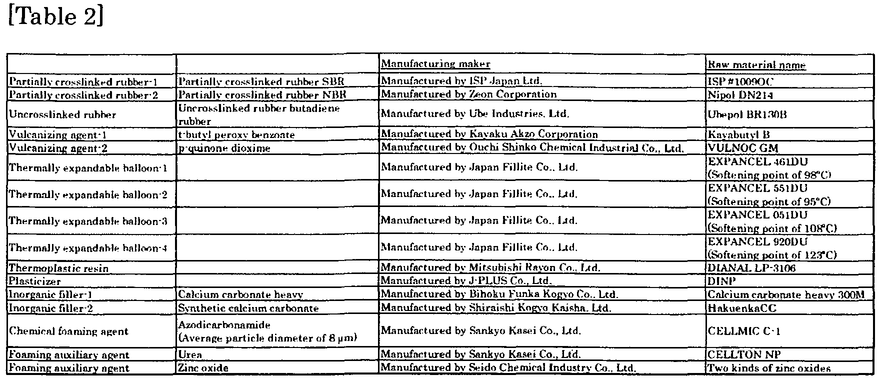

As shown in Table 1, the paste-like thermally foaming filler of the invention containing an uncrosslinked rubber, a quinone-based vulcanizing agent, and a foaming agent exhibits high foaming capability at low temperatures and can form a blocking wall without poor filling even at closed section members of a large section area, such as a center pillar of a car body. Furthermore, when the content of the uncrosslinked rubber and/or a partially crosslinked rubber is set to 8 parts by weight or more, a thermally foaming filler excellent in shower resistance can be formed.

## Claims

1. A paste-like thermally foaming filler, comprising:
an uncrosslinked rubber;
a quinone-based vulcanizing agent;
a foaming agent; and
thermally expandable balloons,
wherein a foaming temperature of the thermally expandable balloons 100°C or lower.

2. The paste-like thermally foaming filler according to Claim 1, further comprising a partially crosslinked rubber.

3. The paste-like thermally foaming filler according to Claim 1 or 2, further comprising a thermoplastic resin.

4. The paste-like thermally foaming filler according to any one of Claims 1 to 3, further comprising a plasticizer.

5. The paste-like thermally foaming filler according to any one of Claims 1 to 4, further comprising an inorganic filler.

6. A paste-like thermally foaming filler, comprising:
2 to 20 parts by weight of an uncrosslinked rubber;
5 to 30 parts by weight of a partially crosslinked rubber;
0.1 to 5 parts by weight of a quinone-based vulcanizing agent;
0.2 to 1.5 parts by weight of thermally expandable balloons;
1 to 10 parts by weight of a thermoplastic resin;
20 to 50 parts by weight of a plasticizer;
15 to 50 parts by weight of an inorganic filler; and
2 to 15 parts by weight of a chemical foaming agent based on the total amount of 100 parts by weight of the paste-like thermally foaming filler,
wherein a foaming temperature of the thermally expandable balloons is 100°C or lower.

7. The paste-like thermally foaming filler according to any one of Claims 1 to 6, wherein a content of the uncrosslinked rubber is 8 parts by weight or more based on a total composition weight.

8. The paste-like thermally foaming filler according to any one of Claims 2 to 6, wherein a content of the uncrosslinked rubber and/or the partially crosslinked rubber is 8 parts by weight or more based on a total composition weight.

## Patentansprüche

1. Ein pastöser wärmeschäumbarer Füllstoff, umfassend:
einen unvernetzten Kautschuk;
ein Vulkanisierungsmittel auf Chinonbasis;
ein Schäummittel; und
wärmeexpandierbare Ballons,
wobei eine Schäumtemperatur der wärmeexpandierbaren Ballons 100°C oder weniger beträgt.

2. Der pastöse wärmeschäumbare Füllstoff gemäß Anspruch 1, ferner umfassend einen teilweise vernetzten Kautschuk.

3. Der pastöse wärmeschäumbare Füllstoff gemäß Anspruch 1 oder 2, ferner umfassend ein thermoplastisches Harz.

4. Der pastöse wärmeschäumbare Füllstoff gemäß einem der Ansprüche 1 bis 3, ferner umfassend einen Weichmacher.

5. Der pastöse wärmeschäumbare Füllstoff gemäß einem der Ansprüche 1 bis 4, ferner umfassend einen anorganischen Füllstoff.

6. Ein pastöser wärmeschäumbarer Füllstoff, umfassend:
2 bis 20 Gewichtsteile eines unvernetzten Kautschuks;
5 bis 30 Gewichtsteile eines teilweise vernetzten Kautschuks;
0,1 bis 5 Gewichtsteile eines Vulkanisierungsmittels auf Chinonbasis;
0,2 bis 1,5 Gewichtsteile wärmeexpandierbarer Ballons;
1 bis 10 Gewichtsteile eines thermoplastischen Harzes;
20 bis 50 Gewichtsteile eines Weichmachers;
15 bis 50 Gewichtsteile eines anorganischen Füllstoffes; und
2 bis 15 Gewichtsteile eines chemischen Schäumungsmittels,
bezogen auf die Gesamtmenge von 100 Gewichtsteilen des pastösen wärmeschäumbaren Füllstoffes,
wobei eine Schäumtemperatur der wärmeexpandierbaren Ballons 100°C oder weniger beträgt.

7. Der pastöse wärmeschäumbare Füllstoff gemäß einem der Ansprüche 1 bis 6, wobei ein Gehalt des unvernetzten Kautschuks 8 Gewichtsteile oder mehr, bezogen auf ein Gesamtgewicht der Zusammensetzung, beträgt.

8. Der pastöse wärmeschäumbare Füllstoff gemäß einem der Ansprüche 2 bis 6, wobei ein Gehalt des unvernetzten Kautschuks und/oder des teilweise vernetzten Kautschuks 8 Gewichtsteile oder mehr, bezogen auf ein Gesamtgewicht der Zusammensetzung, beträgt.

## Revendications

1. Agent de charge thermiquement moussant de type pâte, comprenant :
un caoutchouc non réticulé ;
un agent de vulcanisation à base de quinone ;
un agent moussant ; et
des perles thermo-expansibles,
dans lequel une température de moussage des perles thermo-expansibles est de 100°C ou inférieure.

2. Agent de charge thermiquement moussant de type pâte selon la revendication 1, comprenant en outre un caoutchouc partiellement réticulé.

3. Agent de charge thermiquement moussant de type pâte selon la revendication 1 ou 2, comprenant en outre une résine thermoplastique.

4. Agent de charge thermiquement moussant de type pâte selon l'une quelconque des revendications 1 à 3, comprenant en outre un plastifiant.

5. Agent de charge thermiquement moussant de type pâte selon l'une quelconque des revendications 1 à 4, comprenant en outre un agent de charge inorganique.

6. Agent de charge thermiquement moussant de type pâte, comprenant:
2 à 20 parties en poids d'un caoutchouc non réticulé ;
5 à 30 parties en poids d'un caoutchouc partiellement réticulé ;
0,1 à 5 parties en poids d'un agent de vulcanisation à base de quinone ;
0,2 à 1,5 parties en poids de perles thermo-expansibles ;
1 à 10 parties en poids d'une résine thermoplastique ;
20 à 50 parties en poids d'un plastifiant ;
15 à 50 parties en poids d'un agent de charge inorganique ; et
2 à 15 parties en poids d'un agent moussant chimique
sur la base de la quantité totale de 100 parties en poids de l'agent de charge thermiquement moussant de type pâte,
dans lequel une température de moussage des perles thermo-expansibles est de 100 °C ou inférieure.

7. Agent de charge thermiquement moussant de type pâte selon l'une quelconque des revendications 1 à 6, dans lequel une teneur du caoutchouc non réticulé est de 8 parties en poids ou plus sur la base d'un poids total de la composition.

8. Agent de charge thermiquement moussant de type pâte selon l'une quelconque des revendications 2 à 6, dans lequel une teneur du caoutchouc non réticulé et/ou du caoutchouc partiellement réticulé est de 8 parties en poids ou plus sur la base d'un poids total de la composition.
